# EUROPEAN PATENT APPLICATION

(11) **EP 2 848 401 A2**
(43) Date of publication of application: **18.03.2015**
(21) Application number: 14184459.7
(22) Date of filing: 11.09.2014
(51) Int. Cl.: B32B 5/02

(54) **Multilayer aircraft shade material**

(30) Priority: 12.09.2013 US 201314025089
(71) Applicant: The Boeing Company, Chicago, IL 60606-2016 (US)
(72) Inventor: Thomas, Perkins S., Seattle, WA Washington 98124 (US); Baron, John P., Seattle, WA Washington 98124 (US); Harris, John N., Seattle, WA Washington 98124 (US); Lennon, Brian J., Seattle, WA Washington 98124 (US); Sterling, David E., Seattle, WA Washington 98124 (US)
(74) Representative: Howson, Richard G.B.

(57) **Abstract**

In one aspect, a multilayer material comprises a first layer formed from a thermoplastic elastomeric material, a second layer formed from a fabric and secured to a first side of the first layer, and a third layer formed from a fabric secured to a second side of the first layer. The multilayer material may be incorporated into a window shade for use in a vehicle, e.g., an aircraft or the like.

## Description

### FIELD OF THE DISCLOSURE

This invention relates to aircraft shade materials and assemblies useful in aircraft or other vehicles.

### BACKGROUND

Flexible window shades in vehicles such as aircraft, buses, ships, and the like need to remain durable while subjected to repeated use and extreme environmental conditions including thermal, chemical, moisture, solvent, passenger contact, and ultraviolet (UV) exposure. Accordingly, there is a need for aircraft shade materials comprised of more robust materials capable of withstanding diverse environmental conditions.

### SUMMARY

In various aspects, multilayer materials are provided. In some aspects, a multilayer material comprises a first layer formed from a thermoplastic elastomeric material, a second layer formed from a fabric and secured to a first side of the first layer, and a third layer formed from a fabric secured to a second side of the first layer.

In another aspect there is provided a window shade, comprising a handle, a roller, and a multilayer material, comprising a first layer formed from a thermoplastic elastomeric material, a second layer formed from a fabric and secured to a first side of the first layer, and a third layer formed from a fabric secured to a second side of the first layer.

In another aspect there is provided a window assembly, comprising a fitting, a window, and a window shade assembly comprising a frame and a window shade, comprising a handle a roller and a multilayer material comprising a first layer formed from a thermoplastic elastomeric material, a second layer formed from a fabric and secured to a first side of the first layer, and a third layer formed from a fabric secured to a second side of the first layer.

In another aspect there is provided a method to make a multilayer material comprising applying a primer to at least a first side of a first sheet of polyester fabric, applying a primer to at least a first side of a second sheet of polyester fabric, calendaring a thermoplastic elastomer onto a first side of the polyester fabric, and curing the multilayer material.

The features, functions and advantages discussed herein can be achieved independently in various aspects described herein or may be combined in yet other aspects, further details of which can be seen with reference to the following description and drawings.

### BRIEF DESCRIPTION OF THE DRAWINGS

The detailed description is described with reference to the accompanying figures.
Figs. 1-3 are schematic illustrations of multilayer materials in accordance with some aspects.
Fig. 4 is a flowchart illustrating operations in a method to make a multilayer material in accordance with some aspects.
Fig. 5 is a schematic, exploded view of a window shade assembly in accordance with some aspects.
Fig. 6 is a schematic, exploded view of a window assembly in accordance with some aspects.
Fig. 7 is a schematic view of an aircraft in accordance with some aspects.

### DETAILED DESCRIPTION

Described herein are examples of multilayer materials, window shade and window assemblies comprising multilayer materials, vehicles comprising such assemblies, and methods to make multilayer materials. In the following description, numerous specific details are set forth to provide a thorough understanding of various aspects. However, it will be understood by those skilled in the art that the various aspects may be practiced without the specific details. In other instances, well-known methods, procedures, components, and circuits have not been illustrated or described in detail so as not to obscure the particular aspects.

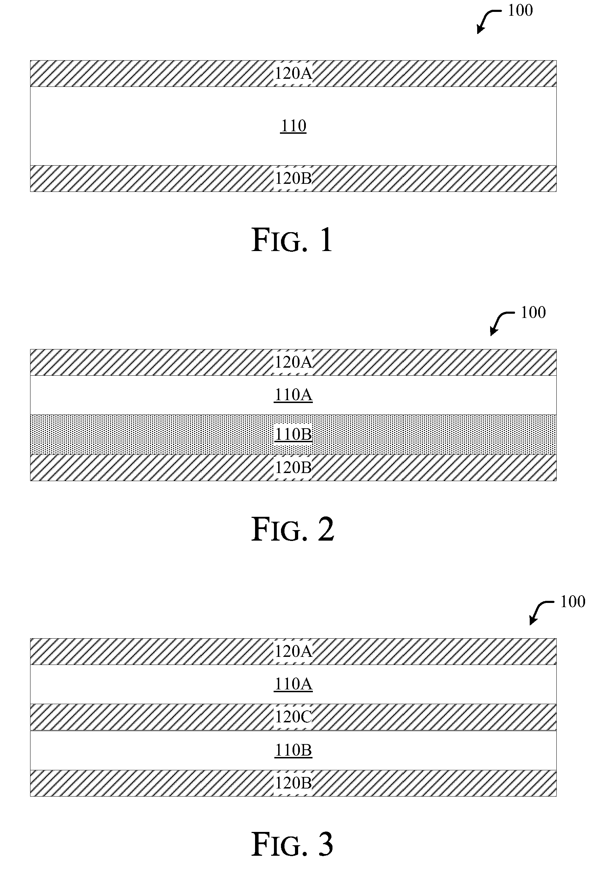

Figs. 1-3 are schematic illustrations of multilayer materials 100 in accordance with some aspects. Referring first to Fig. 1, in some aspects a multilayer material 100 may comprise a first layer 110 formed from a thermoplastic elastomeric material, a second layer 120A formed from a fabric and secured to a first side of the first layer 110, and a third layer 120B formed from a fabric secured to a second side of the first layer 110.

In some aspects the first layer 110 comprises at least one of a silicone material such as CS5093-01, which is a silicone rubber commercially available from Seal Science, Inc. of California, USA), a rubber material such as styrene butadiene rubber sheet commercially available from Rubber Cal of California, USA), a polyisoprene material (such as Cariflex™ polyisoprene rubber commercially available from Kraton of Texas, USA), a polyolefin material such as Clysar^{®} high abuse film commercially available from Clysar® of Iowa, USA, a polyamide material such as cast PA 6 films commercially available from Impex Global, LLC of Texas, USA, a polyimide material such as Kapton^{®} commercially available from DuPont, a copolyestermaterial such as Eastar™ copolyester 6763 commercially available from Eastman Chemical, a fluoroelastomer material such as Viton^{®} films commercially available from DuPont or DaiEl T-530 film commercially available from Daiken Industries, Ltd., of Japan or a urethane material such as 3M™ Polyurethane film tapes or Elastollan® resin from BASF Corporation of Germany, and may be formed to a thickness that measures about 0.1 thousandths of an inch (mils) to about 12 mils. First layer 110 may be doped with a material such as a carbon black material or other dye in a quantity sufficient to render the first layer 110 opaque to visible light. Further, in some aspects the first layer 110 comprises a flame retardant material. Examples of suitable flame retardant materials include at least one of a brominated polymer such as Saytex® flame retardant materials commercially available from Albemarle of Louisiana, USA, a hydrated metal oxide such as Magnifin flame retardants commercially available from Albemarle or Hymod™ products from Huber Engineered Materials of Georgia, USA, ammonium polyphosphate such as Exolit AP products commercially available from Clariant of Switzerland, phosphorus polyols such as Exolit OP products commercially available from Clariant of Switzerland), red phosphorus, or a polyphosphinate (such as Exolit OP products from Clariant of Switzerland).

In some aspects the second layer 120A and the third layer 120B comprise at least one of a fiberglass material, a polyester material, a polyimide material, a polyarylate material, a semi-aromatic polyamide fiber, a polybenzimidazole fiber, a modified acrylic fiber, and a metal oxide fiber material. Second layer 120A and third layer 120B may also be coated with a flame retardant material or may be formed from a material that is inherently flame retardant. Examples of materials suitable for use in second layer 120A and 120B include Vectran™ fibers commercially available from Kuraray Co., Ltd, of Osaka, Japan, Nomex® fibers commercially available from DuPont of Wilmington, Delaware, USA, PBI® fibers commercially available from PBI Performance Products, Inc. of Charlotte, NC, USA, Protex® fibers commercially available from Kaneka Corporation of Osaka, Japan, or a woven fiber commercially available from Vector Systems of Holmen, WI, USA. Other examples may include hydrated inorganic materials that release water vapor at high temperatures to reduce heat (i.e., endothermic materials), or halogenated retardants that act to interrupt the burn cycle (i.e., gas phase retardants), or finally char inducing materials (i.e., intumescents) that generate a char barrier between a substrate and a heat source.

In some aspects the multilayer material 100 may comprise two or more layers of a thermoplastic elastomeric material. Referring to Fig. 2, the multilayer material 100 comprises a fourth layer 110B secured adjacent the first layer 110A. In some aspects the fourth layer 110B is formed from a thermoplastic elastomeric material and comprises a carbon black material in a quantity sufficient to render the fourth layer 110B opaque to visible light. The first layer may comprise a material such as Titanium dioxide. In the aspect depicted in Fig. 2 the first layer 110A may be formed to a thickness of about 0.1 thousandths of an inch (mils) to about 12 mils and the fourth layer 110B may be formed to a thickness of about 0.1 thousandths of an inch (mils) to about 12 mils.

Referring to Fig. 3, in some aspects a fifth layer formed from a fabric material may be interposed between the first layer 110A and the fourth layer 110B.

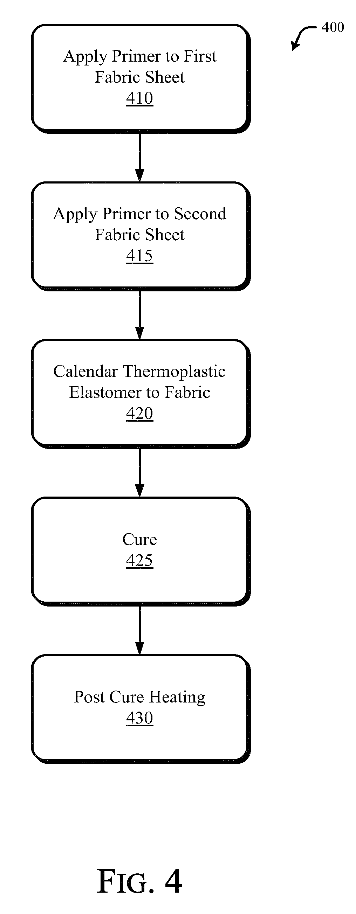

Fig. 4 is a flowchart illustrating operations in a method to make a multilayer material in accordance with some aspects. Referring to Fig. 4, at operation 410 a primer is applied to at least a first side of a first sheet of fabric and at operation 415 a primer is applied to at least a first side of a second sheet of fabric. Examples of suitable primers include Chemlok® 607 and Chemlok® 608 commercially available from the Lord Corporation of Cary, NC, USA and PR-2260 primer commercially available from Dow Chemical of Midland, MI, USA. The primer may be blended with a solvent such as naptha.

At operation 420 a thermoplastic elastomer is calendered to a first fabric sheet and second fabric sheet. In some aspects the thermoplastic elastomer base compound may be cold mixed on roll mill with a peroxide curing agent and the first fabric sheet and second fabric sheet may be passed through the calendar rollers at 1.8pph and to a specified thickness (e.g., 5mil).

At operation 425 the multilayer material is cured. In some aspects the material may be cured in a heat-cure press at a pressure that measures between about 20 pounds per square inch and about 60 pounds per square inch at a temperature that measures between about 200 degrees Fahrenheit and about 280 degrees Fahrenheit and narrower ranges (e.g., 210 - 270 degrees Fahrenheit, including for example, 200, 225, 250, 275, and 280 degrees Fahrenheit), for a time period that measures between about 5 minutes and about 30 minutes and narrower ranges (e.g., between about 10 minutes and 20 minutes, including for example, 5, 10, 15, 20, 25, and 30 minutes).

At operation 430 the multilayer material is subjected to a post-cure heating to burn off an residual catalyst materials. In some aspects the material may be heated to a temperature that measures between about 250 degrees Fahrenheit and 350 degrees Fahrenheit and narrower ranges (e.g., 275 - 325 degrees Fahrenheit, including for example, 250, 275, 300, 325, and 350 degrees Fahrenheit), for a time period that measures between about 1 hours and 10 hours and narrower ranges (e.g., between about 2 hours and 8 hours, including for example, 1, 2, 3, 4, 5, 6, 7, 8, 9, and 10 hours).

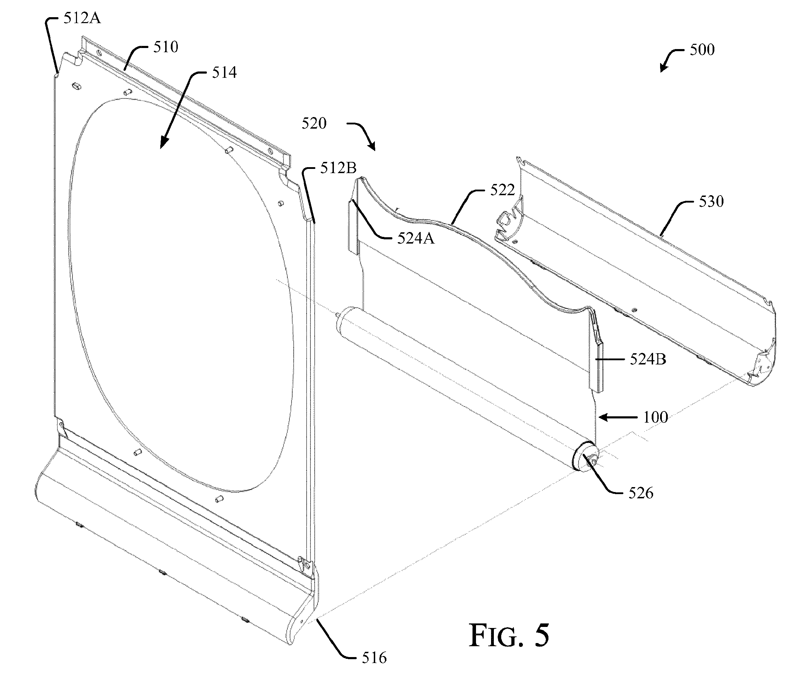

In some aspects a multilayer material as described with reference to Figs. 1-3 may be incorporated into a window shade. Fig. 5 is a schematic, exploded view of a window shade assembly 500 in accordance with some aspects. Referring to Fig. 5, in some aspects window shade assembly 500 comprises a frame 510 which defines a window 514. Frame 510 may be formed from a suitably rigid material, e.g., a metal or a plastic, and comprises tracks 512A, 512B, which may be referred to collectively here by reference numeral 512, and a receptacle 516.

A window shade 520 comprises a handle 522, tabs 524A and 524B, which may be referred to collectively herein by reference numeral 524, a roller 526, and a multilayer material 100 connected to handle 522 and to roller 526. Multilayer material 100 may be dimensioned to cover the window 514.

Window assembly 500 may further comprise a cover 530 which receives roller 526 and covers receptacle 516.

Window shade 500 may be assembled by sliding tabs 524 into tracks 512 and fitting roller 526 into cover 530, then coupling the cover over the receptacle 516 such that the roller 520 is housed in the receptacle 516 and cover 530.

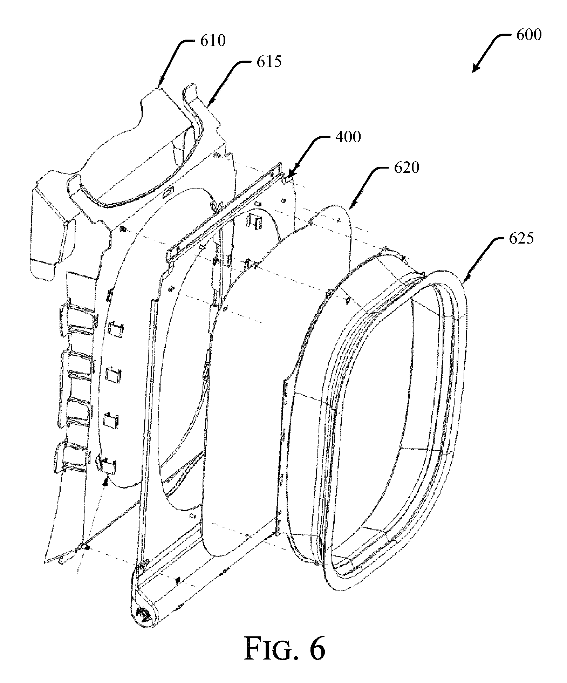

In some aspects a window shade assembly 500 may be incorporated into a window assembly. Fig. 6 is a schematic, exploded view of a window assembly 600 in accordance with some aspects. Referring to Fig. 6, in some aspects a window assembly 600 comprises a shroud 610, a mounting base 615, a window shade assembly 500, a transparent pane 620 and an isolator assembly 625. Window assembly 600 may be secured together using fasteners such as screws or bolts or via interference fit features on mating surfaces. In use, isolator assembly 625 may interface with the frame of a vehicle, e.g., an aircraft, bus, ship, or the like.

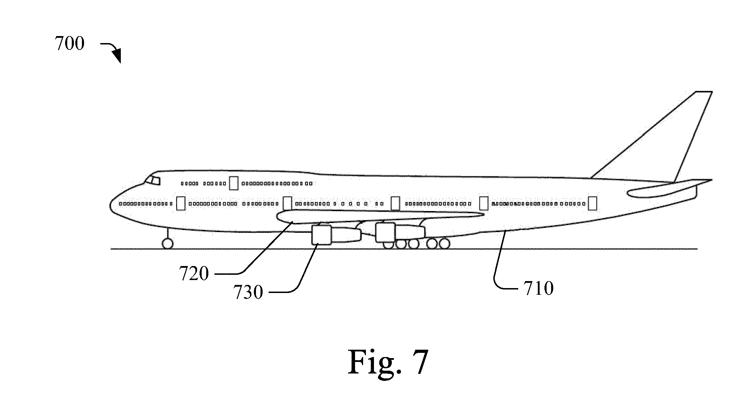

Fig. 7 is a schematic illustration of an aircraft 700 in which a window shade assembly 500 may be installed, according to aspects Referring to Fig. 7, the airplane 700 may be a commercial airline, cargo plane, or small passenger plane. The airplane 700 may comprise a body 710 which defines an interior cabin, one or more wings 720 and one or more engines 630. The particular design of the aircraft 700 is not critical.

Reference in the specification to "one aspect" or "some aspects" means that a particular feature, structure, or characteristic described in connection with the aspect is included in at least an implementation. The appearances of the phrase "in one aspect" in various places in the specification may or may not be all referring to the same aspect.

Also, in the description and claims, the terms "coupled" and "connected," along with their derivatives, may be used. In some aspects of the invention, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Further, the disclosure comprises the following embodiments:
In one embodiment, there is provided a multilayer material 100, comprising:
   a first layer 110 formed from a thermoplastic elastomeric material;
   a second layer 120A formed from a fabric and secured to a first side of the first layer; and
   a third layer 120B formed from a fabric secured to a second side of the first layer.
Optionally, the first layer 110 comprises at least one of a silicone material, a rubber material, a polyisoprene material, a polyolefin material, a polyamide material, a copolyestermaterial, a fluoroelastomer material, or a urethane material.
Optionally, the first layer 110 comprises a carbon black material in a quantity sufficient to render the first layer opaque to visible light.
Optionally, the first layer 110 comprises a flame retardant material comprising at least one of a brominated polymer, a metal oxide, or a polyphosphonate.
Optionally, the second layer 120A and the third layer 120B comprise at least one of a fiberglass material, a polyester material, a polyimide material, a polyarylate material, a semi-aromatic polyamide fiber, a polybenzimidazole fiber, a modified acrylic fiber, and a metal oxide fiber material.
Optionally, the multilayer material 100 further comprises a fourth layer 110B secured adjacent the first layer 110, wherein the fourth layer is formed from a thermoplastic elastomeric material and comprises a carbon black material in a quantity sufficient to render the fourth layer opaque to visible light.
In another embodiment, there is provided a window shade, comprising:
   a handle;
   a roller; and
   a multilayer material 100, comprising:
      a first layer 110 formed from a thermoplastic elastomeric material;
      a second layer 120A formed from a fabric and secured to a first side of the first layer; and
      a third layer formed 120B from a fabric secured to a second side of the first layer.
Optionally, the first layer 110 comprises at least one of a silicone material, a rubber material, a polyisoprene material, a polyolefin material, a polyamide material, a copolyestermaterial, a fluoroelastomer material, or a urethane material.
Optionally, the first layer 110 comprises a carbon black material in a quantity sufficient to render the first layer opaque to visible light.
Optionally, the first layer 110 comprises a flame retardant material comprising at least one of a brominated polymer, a metal oxide, or a polyphosphonate.
Optionally, the second layer 120A and the third layer 120B comprise at least one of a fiberglass material, a polyester material, a polyimide material, a polyarylate material, a semi-aromatic polyamide fiber, a polybenzimidazole fiber, a modified acrylic fiber, and a metal oxide fiber material
Optionally, the multilayer material 100 further comprises a fourth layer 110B secured adjacent the first layer 110, wherein the fourth layer is formed from a thermoplastic elastomeric material and comprises a carbon black material in a quantity sufficient to render the fourth layer opaque to visible light.
In another embodiment, there is provided a window assembly, comprising:
   a mounting base;
   a transparent pane; and
   a window shade assembly, comprising:
      a frame; and
      a window shade, comprising:
         a handle;
         a roller; and
         a multilayer material 100, comprising:
            a first layer 110 formed from a thermoplastic elastomeric material;
   a second layer 120A formed from a fabric and secured to a first side of the first layer; and
   a third layer 120B formed from a fabric secured to a second side of the first layer.
Optionally, the first layer 110 comprises at least one of a silicone material, a rubber material, a polyisoprene material, a polyolefin material, a polyamide material, a copolyestermaterial, a fluoroelastomer material, or a urethane material.
Optionally, the first layer 110 comprises a carbon black material in a quantity sufficient to render the first layer opaque to visible light.
Optionally, the first layer 110 comprises a flame retardant material comprising at least one of a brominated polymer, a metal oxide, ammonium polyphosphate, phosphorus polyols, red phosphorus, or a polyphosphonate.
Optionally, the second layer 120A and the third layer 120B comprise at least one of a fiberglass material, a polyester material, a polyimide material, a polyarylate material, a semi-aromatic polyamide fiber, a polybenzimidazole fiber, a modified acrylic fiber, and a metal oxide fiber material.
Optionally, the multilayer material 100, further comprises a fourth layer 110B secured adjacent the first layer 110, wherein the fourth layer is formed from a thermoplastic elastomeric material and comprises a carbon black material in a quantity sufficient to render the fourth layer opaque to visible light.
In another embodiment, there is provided a method to make a multilayer material 100, comprising
   applying a primer to at least a first side of a first sheet of fabric;
   applying a primer to at least a first side of a second sheet of fabric;
   calendaring a thermoplastic elastomer onto a first fabric sheet and second fabric sheet; and
   curing the multilayer material.
Optionally, curing the multilayer material 100 comprises applying a heat-cure press to the multilayer material at a pressure that measures between 20 pounds per square inch and 60 pounds per square inch at a temperature that measures between 200 degrees Fahrenheit and 280 degrees Fahrenheit for a time period that measures between 5 minutes and 30 minutes.
Optionally, the method further comprises heating the multilayer material 100 to a temperature that measures between 250 degrees Fahrenheit and 350 degrees Fahrenheit for a time period that measures between 1 hour and 110 hours.

Although aspects have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. A multilayer material (100), comprising:
a first layer (110) formed from a thermoplastic elastomeric material;
a second layer (120A) formed from a fabric and secured to a first side of the first layer; and
a third layer (120B) formed from a fabric secured to a second side of the first layer.

2. The multilayer material (100) of claim 1, wherein the first layer (110) comprises at least one of a silicone material, a rubber material, a polyisoprene material, a polyolefin material, a polyamide material, a copolyestermaterial, a fluoroelastomer material, or a urethane material.

3. The multilayer material (100) of claims 1 or 2, wherein the first layer (110) comprises a carbon black material in a quantity sufficient to render the first layer opaque to visible light.

4. The multilayer material (100) of claims 1-3, wherein the first layer (110) comprises a flame retardant material comprising at least one of a brominated polymer, a metal oxide, or a polyphosphonate.

5. The multilayer material (100) of claims 1-4, wherein the second layer (120A) and the third layer (120B) comprise at least one of a fiberglass material, a polyester material, a polyimide material, a polyarylate material, a semi-aromatic polyamide fiber, a polybenzimidazole fiber, a modified acrylic fiber, and a metal oxide fiber material.

6. The multilayer material (100) of claims 1-5, further comprising a fourth layer (110B) secured adjacent the first layer (110), wherein the fourth layer is formed from a thermoplastic elastomeric material and comprises a carbon black material in a quantity sufficient to render the fourth layer opaque to visible light.

7. A method to make a multilayer material (100), comprising
applying a primer to at least a first side of a first sheet of fabric;
applying a primer to at least a first side of a second sheet of fabric;
calendaring a thermoplastic elastomer onto a first fabric sheet and second fabric sheet; and
curing the multilayer material.

8. The method of claim 7, wherein curing the multilayer material (100) comprises applying a heat-cure press to the multilayer material at a pressure that measures between 20 pounds per square inch and 60 pounds per square inch at a temperature that measures between 200 degrees Fahrenheit and 280 degrees Fahrenheit for a time period that measures between 5 minutes and 30 minutes.

9. The method of claims 7 or 8, further comprising heating the multilayer material (100) to a temperature that measures between 250 degrees Fahrenheit and 350 degrees Fahrenheit for a time period that measures between 1 hour and 110 hours.
